# EUROPEAN PATENT APPLICATION

(11) **EP 0 691 618 A1**
(43) Date of publication of application: **10.01.1996**
(21) Application number: 95304510.1
(22) Date of filing: 27.06.1995
(51) Int. Cl.: G06F 13/40, G06F 15/78

(54) **Integrated Processor**

(30) Priority: 08.07.1994 US 272699
(71) Applicant: ADVANCED MICRO DEVICES INC., Sunnyvale, California 94088-3453 (US)
(72) Inventor: Jones, Robert, Austin, Texas 78748 (US)
(74) Representative: Picker, Madeline Margaret

(57) **Abstract**

A modified bus structure is disclosed comprised of a network of individual uni-directional buses connecting together the various components in an integrated processor. The individual buses are independently tailored and configured to deliver only those signals that are required by the transmitting and receiving components. Each component includes an output buffer, comprised of a plurality of AND gate structures. The AND gate preferably is implemented through a NAND gated connected to a plurality of parallel inverters. The number of inverters required corresponds to the number of uni-directional output buses from that particular component. Similarly, each component includes an input multiplexer for selecting the appropriate input signal. In the preferred embodiment, the input multiplexer comprises a plurality of OR gate structures, each of which preferably is implemented by a plurality of parallel inverters connected to a NAND gate.

## Description

The present invention relates generally to the transfer of address, data and control signals in a computer system.

We will describe a local bus system for providing address, data and control signals to and from components in an integrated processor.

Furthermore, we will describe an improved local bus architecture for facilitating the design and layout of integrated processors.

It is common to provide a relatively large local or internal bus to connect the various components in an integrated processor together. The local bus typically may include, for example, 32 address lines, 32 data lines, and a number of control lines, all of which connect to most if not all of the components residing in the processor. Signals in the processor are transmitted bi-directionally over the local bus so that, for example, the CPU can both send and receive data on the same set of data lines D[31:0]. Thus, the local bus acts as a highway through which the majority of information is conveyed to the components located in the integrated processor.

Recently, the trend in the computer industry has been to integrate components that were previously provided separately onto one integrated processor. As additional components are integrated in the processor, the size of the local bus must be increased to serve these additional components. In addition, the driving requirements to drive signals throughout this expanded local bus architecture also increases dramatically.

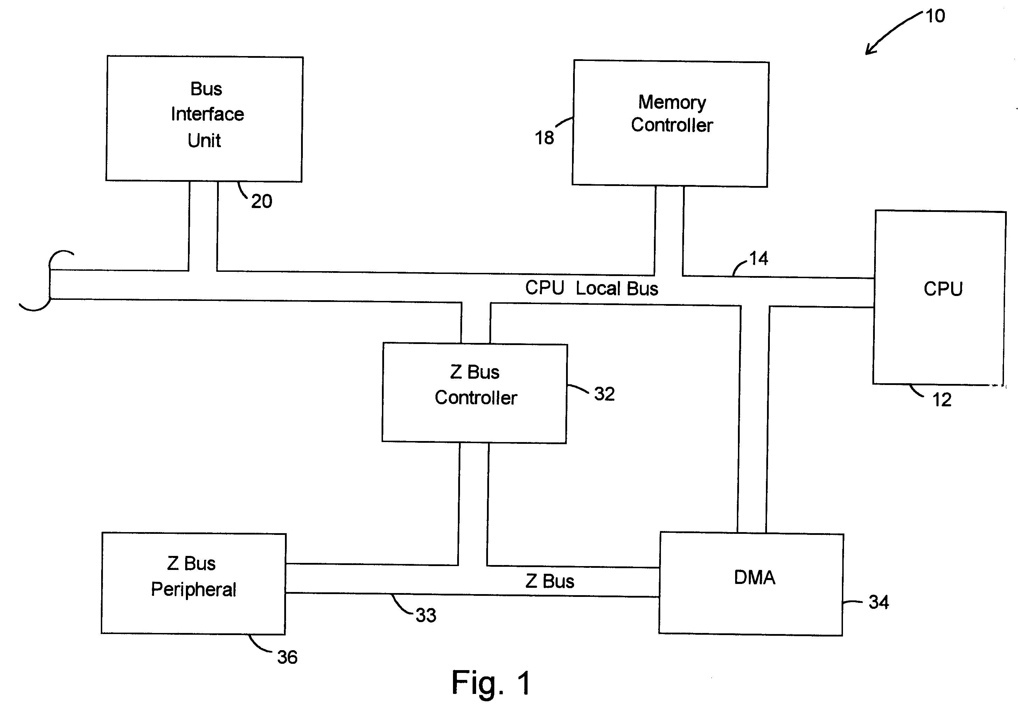

Figure 1 is a block diagram of a computer system 10 which includes a microprocessor (CPU) 12, a CPU local bus 14 coupled to the microprocessor 12, a memory controller (MCU) 18 and a bus interface unit (BIU) 20, both of which are connected to the CPU local bus, and a Z-bus controller 32 and a direct memory access (DMA) controller 34 connected to a Z-bus 33. Microprocessor 12 is illustrative of, for example, a model 80486 microprocessor, and CPU local bus 14 is exemplary of an 80486-style local bus. The CPU local bus 14 includes a set of data lines D[31:0], a set of address lines A[31:0], and a set of control lines (not shown individually). Additional details regarding the various bus cycles and protocols of the 80486 CPU local bus 14 are described in numerous publications, and as such are not set forth in detail herein. The CPU local bus 14 connects to each of several components located on the integrated processor, including the CPU 12, the memory controller 18, the BIU 20, the DMA 34 and the Z-bus controller 32.

The BIU 20 connects the CPU local bus 14 to an external bus, such as a PCI bus or an ISA (Industry Standard Architecture) bus (not shown). The BIU 20 provides a standard interface between the CPU local bus 14 and the external bus. As such, the BIU 20 orchestrates the transfer of data, address, and control signals between the two buses.

The memory controller 18 controls data transactions to system memory (not shown). Thus, all read and write cycles to system memory are transmitted to the memory controller 18. In response, the memory controller 18 opens the appropriate page in memory and performs either a read or write to the selected address in memory based upon the status of a read/write control line.

The Z-bus controller 32 connects to local bus 14 and to the Z-bus 33 to provide an interface between these two buses. The Z-bus 33 comprises an 8-bit data bus (with additional control lines) and typically connects to a Z-bus peripheral unit 36 and DMA controller 38. The peripheral device 36 may comprise a timer, configuration registers, AT peripherals, an interrupt controller or various other components. The Z-bus controller 32 provides for CPU access to all integrated resources such as Z-bus peripheral unit 36.

The microprocessor 12, memory controller 16, BIU 20, and DMA 34 have traditionally been fabricated on separate integrated circuit chips. A recent trend in computer systems has developed, however, in which the CPU core components are combined with a variety of peripheral devices on a single integrated processor chip. For example, the integrated processor chip may include a bus interface unit (BIU) to provide a high performance interface between an internal CPU local bus and an external bus, such as a PCI bus. By providing a high performance interface to an external PCI bus, relatively high performance characteristics can be achieved with respect to external data transfers.

Because numerous components connect to the local bus in such an integrated processor design, precautionary steps must be taken to prevent multiple devices from driving signals on the bus at the same time. For example, if the CPU 12 attempted to drive a "1" on data line DO of the local bus 14 while the memory controller 18 simultaneously attempted to drive a "0" on the same data line, problems obviously would arise with bus contention.

To prevent these problems, each component on the integrated processor includes a three state buffer for each of its various output lines. As will be understood by one skilled in the art, the three state buffer is capable of producing both a low and a high output signal onto the local bus, to indicate a digital "0" and a digital "1" when the output is enabled. When the output is not enabled, the three state buffer functions to "disconnect" the component from the local bus, so that neither a low or high signal is driven on the bus.

During the design and layout of integrated processors, software packages typically are used to optimize the layout of the processor. After the initial layout is completed, the three state drivers are tested to determine how much load they are required to drive when asserting a signal on the bus. If the load is too large for the driver selected, which happens relatively frequently, a larger driver is selected, and the layout is reconfigured in the software optimization program. Typically, the reconfiguration with the larger three state buffers will tend to completely change the system layout from the previous layout. This changed layout may then require a larger driving capacity, mandating another reconfiguration process. Thus, like a dog chasing its tail, the size of the three state buffer demanded by the system may continue to grow as the system is reconfigured.

It would obviously be advantageous to develop a system in which the drivers could be selected initially without requiring repeated changes as the system is modified and reconfigured. Similarly, it would be advantageous to minimize the space required to implement the local bus system and the driving requirements necessary to drive signals through the local bus. Although the benefits of such a system are immediately apparent, to date no one has successfully developed such a system.

We will describe a computer system that includes individual uni-directional buses between components on the integrated processor. While this approach flies in the face of industry convention, it has several unexpected advantages over the conventional use of a large bi-directional bus that connects to all or most of the components on the integrated processor.

In the preferred embodiment, individually tailored uni-directional buses connect the various integrated components together in the integrated processor. These integrated components may include, for example, a CPU core, a BIU, a memory controller, a DMA controller, a Z-bus controller, and a Z-bus peripheral device. Each of these components includes a plurality of input multiplexers (one for each data line) and output buffers (one for each data line). The input multiplexers preferably receive the signals for a data bit from the various integrated components. The multiplexers preferably comprise a plurality of OR gate structures, constructed as a plurality of parallel inverters connected to a NAND gate. The output buffers preferably comprise a plurality of AND gate structures, constructed of a NAND gate connected to a plurality of parallel inverters (one inverter for each output line).

The use of the individual uni-directional buses permits the size of each bus to be tailored to the particular requirements of the system, so that only the data lines required need be provided between two components. In addition, the buffers can be independently located and sized on the integrated processor to facilitate the optimal layout of the processor.

Other features and advantages of the invention will become apparent upon reading the following detailed description and upon reference to the accompanying drawings in which:
Figure 1 shows a functional block diagram of a prior art computer system;
Figure 2 depicts a schematic of the integrated processor constructed in accordance with the preferred embodiment;
Figure 3 is a schematic illustration of the output buffer constructed in accordance with the preferred embodiment of Figure 2; and
Figure 4 is a schematic illustration of the input multiplexer constructed in accordance with the preferred embodiment of Figure 2.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

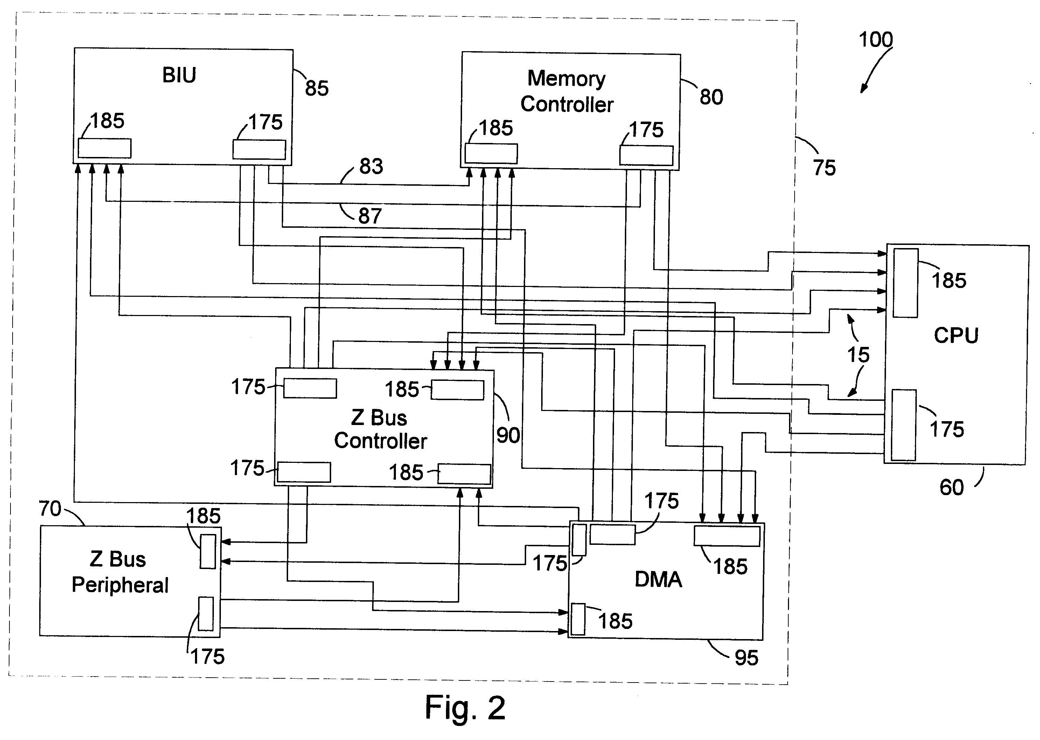

Referring now to Figure 2, an integrated processor 100 constructed in accordance with the preferred embodiment generally comprises a CPU core 60 connected by bus structure 15 to an integration section 75 of the processor 100. The integration section 75 preferably includes a memory controller (MCU) 80, a bus interface unit (BIU) 85, a Z bus controller 90, a direct memory access 95 and a Z-bus peripheral 70. One skilled in the art will understand that any one or more of these components could be removed from the integration section 75 of the processor 100 without departing from the principles of the present invention. Alternatively, other components could be added to the processor 100 without departing from the present invention.

Referring still to Figure 2, the conventional bi-directional local bus (as shown for example in Figure 1) is removed from the integrated processor 100 in the preferred embodiment in favor of bus structure 15. Bus structure 15 preferably comprises a network of individual uni-directional buses which electrically connect the various components in the integrated processor 100. Thus, for example, a uni-directional bus 83 functions to transmit signals from the BIU 85 to the MCU 80, while uni-directional bus 87 functions to transmit signals from the MCU 80 to the BIU 85. Other components in the integrated processor 100 are connected via uni-directional buses in similar fashion as shown in Figure 2. Broadly speaking, therefore, each component in the integrated processor 100 includes an associated uni-directional output bus to each of the other components in the processor 100 to which it must send signals. In the preferred embodiment, each of the components in the integrated processor 100 include an output buffer 175 for driving out signals on the associated uni-directional buses to the other integrated components. In addition, each component includes an input multiplexer 185 for receiving signals from the other integrated components.

For example, in the preferred embodiment the BIU 85 will receive a data D0 signal from the memory controller 80, the DMA controller 95, the Z-bus controller 90 and the CPU core 60. Similarly, the memory controller 80 will send a data D0 signal to the BIU 85, the DMA controller 95, the Z-bus controller 90 and the CPU core 60.

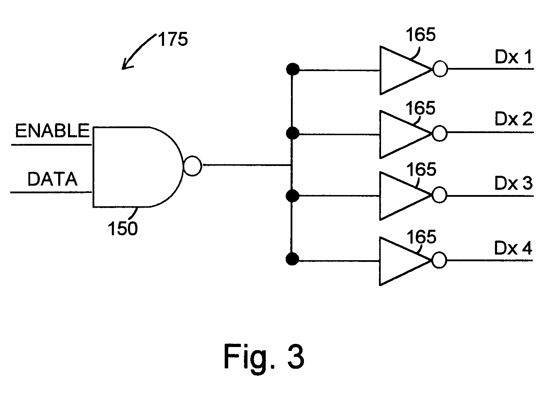

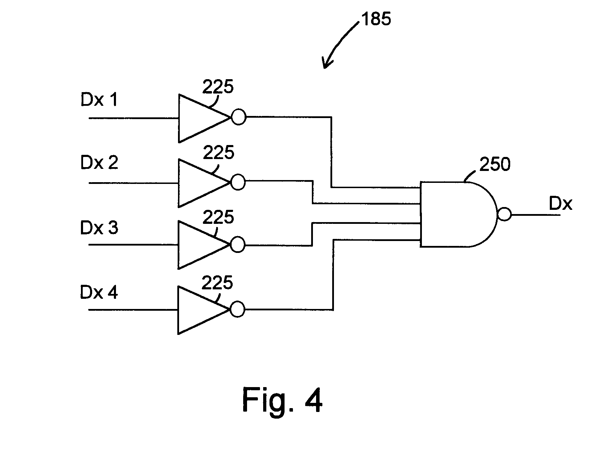

The circuit design illustrated in Figure 2 has several unexpected advantages and flies in the face of the conventional practice of providing a bi-directional central bus connection to system components. *See Digital* *Electronics*, §8.11, p. 329 (Cambridge University Press 1980). One advantage is that the number of connections between components can be specifically tailored to provide only those signals which must be transmitted between those particular two components. Thus, for example, if the memory controller 80 never transmits an address signal to the BIU 85, no address lines need be provided as part of the uni-directional bus from the memory controller 80 to the BIU 85. In addition, the independent buses may be connected in the most direct path between the two components, instead of attempting to centrally locate a large local bus. This results in shorter paths between components, thereby limiting the driving capacity of the components. Other advantages will become apparent in relation to the discussion of the input and output buffers of Figures 3 and 4.

Referring now to Figure 3, the output buffer 175 constructed in accordance with the preferred embodiment functions as a plurality of AND gates, "anding" together an ENABLE signal and a DATA signal (or an address or control signal) from the particular component. Only one such AND gate structure is shown in Figure 3, with the understanding that similar AND gate structures would be provided for each data, address and control line forming part of the uni-directional output buses from that component. A preferred output table for Dₓ is shown in Table I:

**TABLE I**

| DATA | ENABLE | D_{*x*} |
|---|---|---|
| 0 | 0 | 0 |
| 0 | 1 | 0 |
| 1 | 0 | 0 |
| 1 | 1 | 1 |

Thus, as will be understood by one skilled in the art, the output signal Dₓ only reflects the DATA signal when the ENABLE input line is high. The AND gate is implemented in the preferred embodiment of Figure 3 by providing a NAND gate 150 connected to a plurality of inverters 165. The input signals to the NAND gate comprise the DATA (or address or control) signal from the component and the ENABLE input. Thus, the data output line Dₓ may represent the data line D0, for example. The number of inverters 165 required is based upon the number of components to which the output signal must be transmitted. As an example, if the D0 line from the memory controller 80 must be sent to four different components, four separate inverters 165 would be used to drive that signal to each of the individual components when an ENABLE signal is generated by the memory controller 80. Thus, each of the Dₓ output lines would form part of a separate uni-directional output bus. Additional data lines, address lines and control lines would be constructed in similar fashion to produce the necessary output signals for the uni-directional buses.

The use of the inverters 165 as drivers has particular advantages. One advantage is that the inverters 165 may be located independently of one another. This ability to separately locate the inverters 165 minimizes loading on the inverters 165, because each inverter may be placed more closely to the receiving component. In addition, the size (or driving capacity) of each of these inverters can be chosen independently. Thus, if one of the inverters is required to drive a larger load than the other inverters for the same data signal, then that inverter can be individually chosen to handle that larger load. Also, because the inverters 165 only drive one line, instead of an entire bi-directional local bus as in the prior art system, there will be relatively little fluctuation in the load placed on the individual inverters during system layout and/or system reconfiguration.

Referring now to Figure 4, the input buffers or multiplexers 185 preferably comprise a plurality of OR gates for combining each of the various output signals from the various components. Once again, only one such OR gate is shown, with the understanding that other OR gates are provided for each data, address or control input line. The input multiplexer 185 will produce a low output signal for Dₓ if, for example, all of the Dₓ output signals from the other components are driven low, as shown in Table II:

**TABLE II**

| INPUTS | | | | OUTPUT |
|---|---|---|---|---|
| D_{*x1*} | D_{*x2*} | D_{*x3*} | D_{*x4*} | D_{*x*} |
| 0 | 0 | 0 | 0 | 0 |

| INPUTS | | | | OUTPUT |
|---|---|---|---|---|
| D_{*x1*} | D_{*x2*} | D_{*x3*} | D_{*x4*} | D_{*x*} |
| 0 | 0 | 0 | 1 | 1 |
| 0 | 0 | 1 | 0 | 1 |
| 0 | 0 | 1 | 1 | 1 |
| 0 | 1 | 0 | 0 | 1 |
| 0 | 1 | 0 | 1 | 1 |
| 0 | 1 | 1 | 0 | 1 |
| 0 | 1 | 1 | 1 | 1 |
| 1 | 0 | 0 | 0 | 1 |
| 1 | 0 | 0 | 1 | 1 |
| 1 | 0 | 1 | 0 | 1 |
| 1 | 0 | 1 | 1 | 1 |
| 1 | 1 | 0 | 0 | 1 |
| 1 | 1 | 0 | 1 | 1 |
| 1 | 1 | 1 | 0 | 1 |
| 1 | 1 | 1 | 1 | 1 |

Thus, if any one of the Dₓ output signals are driven high by the output buffers 175, the input multiplexer 185 will produce a high output signal. In the preferred embodiment of Figure 4, the OR gate is implemented through a plurality of inverter gates 225 connected to a NAND gate 250. As one skilled in the art will realize, other OR gate configurations can be used without departing from the principles of the present invention. In addition, multiplexer configurations other than OR gates could also be used. For example, an enable output could be provided from each component to serve as a select signal for the multiplexer to select the appropriate input line.

When a large local bus is used, it is necessary to provide three state drivers on each of the output lines to maintain the output line either high, low, or to disconnect the line from the bus. In these systems, when a signal is driven on the bus, it is necessary to have a strong enough driver to drive the signal satisfactorily to the entire bus and to all the components on the bus. Typically, these drivers face relatively significant loads, requiring a large driving capacity. This requirement is reduced in the preferred embodiment because the output buffer only needs to drive one line (or one line and an enable signal) to a single component.

Numerous variations and modifications will become apparent to those skilled in the art once the above disclosure is fully appreciated. For example, although bus 106 of Figure 1 is a CPU local bus, bus 106 could alternatively be coupled to microprocessor 104 via a secondary bus and a bus bridge. It is intended that the following claims be interpreted to embrace all such variations and modifications.

## Claims

1. An integrated processor, comprising:
a CPU connected to an integration section via a bus structure;
said integration section including a bus interface unit and a memory controller;
wherein said bus interface unit and said memory controller are electrically connected together by a pair of uni-directional buses.

2. An integrated processor as in claim 1, wherein said integration section further comprises;
a direct memory access controller connected to each of said memory controller and to said bus interface unit by separate uni-directional buses.

3. An integrated processor as in claim 2, wherein said bus structure comprises a network of individual uni-directional buses.

4. An integrated processor as in claim 2, wherein said memory controller, said direct memory access controller and said bus interface unit connect to said CPU via separate individual uni-directional buses.

5. An integrated processor as in claim 2, wherein said bus interface unit, said memory controller and said direct memory access controller each include an output buffer.

6. An integrated processor as in claim 5, wherein said output buffer includes a plurality of AND gates for driving out a data signal.

7. An integrated processor as in claim 6, wherein said AND gate is constructed of a NAND gate connected to a plurality of parallel inverters.

8. An integrated processor as in claim 7, wherein the number of said inverters corresponds to the number of components to which the data signal is transmitted.

9. An integrated processor as in claim 2, wherein said bus interface unit, said memory controller and said direct memory access controller each include an input buffer.

10. An integrated processor as in claim 9, wherein said input buffer comprises a multiplexer.

11. An integrated processor as in claim 9, wherein said input buffer includes a plurality of OR gates for receiving a data signal.

12. An integrated processor as in claim 11, wherein said OR gate is constructed of a plurality of parallel inverters connected to a NAND gate.

13. An integrated processor as in claim 12, wherein the number of said inverters corresponds to the number of components from which the data signal is transmitted.

14. An integrated processor, comprising:
a CPU;
a bus interface unit; and
a memory controller;
wherein said bus interface unit, said memory controller and said CPU are electrically connected together by separate and individual uni-directional buses.

15. An integrated processor as in claim 14, further comprising;
a Z-bus controller connected to said CPU, said memory controller and said bus interface unit by separate and individual uni-directional buses.

16. An integrated processor as in claim 15, wherein said Z-bus controller connects to a timer and a direct memory access controller via separate and individual buses.

17. An integrated processor as in claim 16, wherein said individual buses vary in size.

18. An integrated processor as in claim 14, wherein said CPU, said memory controller and said bus interface unit include an input buffer and an output buffer.

19. An integrated processor as in claim 18, wherein said output buffer comprises a plurality of drivers for driving a single output line.

20. An integrated processor as in claim 19, wherein the size of each of said plurality of drivers can be independently selected.

21. An integrated processor as in claim 20, wherein each of said plurality of drivers can be independently placed in the integrated circuit.

22. An integrated processor as in claim 21, wherein each of said plurality of drivers comprises a single inverter.

23. An integrated processor as in claim 22, wherein said inverters connect to the output of a NAND gate.

24. An integrated processor as in claim 23, wherein said NAND gate receives a data input signal and an enable signal.
